# FASCICULE DE BREVET EUROPEEN

(11) **EP 0 359 683 B1**
(45) Date de publication et mention de la délivrance du brevet: **11.08.1993**
(21) Numéro de dépôt: 89420341.3
(22) Date de dépôt: 12.09.1989
(51) Int. Cl.: G21C 21/18, G21C 7/24

(54) **Procédé de fabrication d'une pastille absorbeuse de neutrons, pastille obtenue et utilisation**
Verfahren zur Herstellung einer Neutronen absorbierenden Tablette, erhaltene Tablette und Verwendung
Method for producing a neutron absorber pellet, pellet obtained and use

(30) Priorité: 15.09.1988 FR 8812550
(43) Date de publication de la demande: 21.03.1990
(73) Titulaire: CEZUS Compagnie Européenne du Zirconium, F-92400 Courbevoie (FR)
(72) Inventeur: Boutin, Jean, F-38400 Saint Martin D'Heres (FR); Lamaze, Airy-Pierre, F-38000 Grenoble (FR); Vesterlund, Gunnar, Vasteras (SE)
(74) Mandataire: Séraphin, Léon

(56) Documents cités:
- FR-A- 1 574 399
- US-A- 3 250 729
- US-A- 3 505 064
- CHEMICAL ABSTRACTS, vol. 101, 1984, page 508, résumé no. 119163z, Columbus, Ohio, US; & JP-A-59 60 286

## Description

La présente invention concerne un procédé de fabrication d'une pastille absorbante pour les neutrons, ainsi que cette pastille et son utilisation dans une barre de contrôle de réacteur nucléaire à eau, par exemple un réacteur du type BWR.

La demande de brevet JP-A-60046486 décrit une barre de contrôle cruciforme comprenant des éléments absorbants métalliques en hafnium (Hf) ainsi que des éléments absorbants en carbure de bore (B₄ C). Ces éléments absorbants sont disposés de façon à obtenir la même durée d'épuisement à chaque niveau de la barre de contrôle, l'utilisation de Hf et Eu chers et lourds étant ainsi limitée.

Par ailleurs, l'abrégé de la demande de brevet JP-A-5960286 décrit un élément fortement absorbant pour les neutrons obtenu par moulage ou frittage d'un mélange de poudre céramique (B₄C, HfO₂, Eu₂ O₃) et métal (Hf,Eu,Ni,Cu), utilisé comme poison nucléaire dans les réacteurs nucléaires.

Selon la position d'un élément absorbant dans la barre de contrôle, l'importance des flux de neutrons à absorber et l'énergie de ces neutrons sont variables, et les documents cités montrent que des modifications des durées de vie des éléments absorbants et du pouvoir absorbant de la barre de contrôle sont recherchées.

La demanderesse a cherché à mettre au point des moyens d'absorption plus facilement réglables et de fabrication économique. Elle a cherché aussi à obtenir des capacités d'absorption variables le long d'un même élément absorbeur de neutrons, permettant de réaliser des adaptations plus précises aux situations neutroniques.

### EXPOSE DE L'INVENTION

L'invention a pour premier objet un procédé de fabrication d'une pastille absorbeuse de neutrons nue ou "pellet" destinée à être utilisée dans un dispositif de contrôle de réacteur nucléaire, par exemple une croix de contrôle d'un réacteur du type BWR, caractérisé en ce qu'il comprend les étapes suivantes :
a) on prépare des produits compactables comprenant (% en masse) :
   . des cristaux d'électrolyse ou des copeaux de Hf et éventuellement de la poudre de carbure de bore, de masse totale (Hf + B₄C) = 40 à 100%, le ratio Hf/(Hf+B₄C) étant de 0,20 à 1;
   . éventuellement d'autres éléments métalliques fondant à plus de 400°C;
b) on mélange ces produits, et on les comprime dans un moule en une ou plusieurs opérations de remplissage et de compression, jusqu'à obtenir une pastille de densité apparente supérieure à 80% de sa densité moyenne à l'état massif et typiquement comprise entre 85 et 95% de cette densité;
c) on effectue éventuellement sur cette pastille un traitement de frittage;
d) on extrait ou on a extrait cette pastille du moule;
e) on rectifie éventuellement ladite pastille, pour amener son diamètre ou au moins un diamètre important pour son bon coulissement dans une gaine métallique ou dans un trou borgne d'une barre de contrôle, à une tolérance de plus ou moins 0,02 mm ou plus serrée. En l'absence de rectification, des tolérances de plus ou moins 0,03 mm sur le diamètre sont typiquement obtenues.

Les pastilles de l'invention ont ainsi des teneurs en Hf et éventuellement en B choisies à la demande, et elles sont typiquement disposées dans un dispositif de contrôle de réacteur en des localisations dans lesquelles leur composition Hf/B₄C, choisie par l'expérience et/ou par des calculs d'efficacité d'absorption de neutrons, permettra d'obtenir une vitesse d'épuisement optimale.

Les produits compactables en Hf utilisés contiennent de préférence au moins 20% en masse de cristaux d'électrolyse, utilisés ici de façon nouvelle et particulièrement surprenante. L'intérêt de ces cristaux est tel qu'ils représentent de préférence encore 0,5 à 1 fois la masse totale de Hf, et encore mieux 0,8 à 1 fois la masse totale de Hf et en particulier la totalité du Hf.

La demanderesse s'est en effet aperçue que les cristaux d'électrolyse en Hf se prêtaient particulièrement bien au compactage par compression, et qu'ils ne présentaient pas le caractère pyrophorique habituel du Hf finement divisé, obtenu par exemple à partir d'éponge Kroll.

De façon typique, ces cristaux ont une masse volumique apparente allant de 2 à 6 g/cm³ et, individuellement, une taille variable allant de 0,1 mm à 3 ou 4 mm, avec un aspect massif ou aiguillé selon les conditions d'électrolyse. Ils sont souvent groupés en agrégats, correspondant à la croissance simultanée des dendrites ou aiguilles selon plusieurs axes cristallographiques, la taille de ces agrégats allant alors typiquement de 3 mm à 2 cm.
Les agrégats les plus grands sont soit éliminés pour cette utilisation, soit fragmentés par exemple par broyage pour revenir à une taille inférieure, typiquement moins de 0,5 à 0,3 fois le diamètre ou l'épaisseur du produit compacté à obtenir.

A la sortie de l'électrolyse, qui a typiquement eu lieu dans un bain de chlorures fondus, les cristaux d'électrolyse en Hf sont le plus souvent lavés et séchés. Leurs teneurs en H et Cl à ce stade, habituellement inférieures à respectivement 40 et 50 ppm, peuvent être abaissées à moins de 25 à 30 ppm, grâce à un réglage soigné des conditions d'électrolyse, éventuellement complété par un séchage plus poussé que le séchage à l'ambiante : entre 150 et 300°C sous vide meilleur que 1,3 Pa ou sous gaz inerte.

On peut aller encore plus loin dans la purification en H et Cl, en soumettant les cristaux d'électrolyse, non pas à ce traitement entre 150 et 300°C, mais à un traitement de 8h à 48h entre 1000 et 1250°C et typiquement de 16h à 32h entre 1050 et 1150°C, sous vide meilleur que 1 mPa. On obtient alors des teneurs résiduelles en H et Cl respectivement inférieures à 20 ppm et 10 ppm.

L'utilisation directe des cristaux d'électrolyse en Hf est d'un grand intérêt industriel et économique.
C'est du Hf économique et d'excellente pureté dont la bonne aptitude au compactage par compression semble liée à une proportion de vides élevée, se traduisant par les masses volumiques citées (2 à 6 g/cm³), très faibles par rapport à la masse volumique de Hf massif (= 13,29 g/cm³).

Dans l'invention, on s'intéresse particulièrement non seulement à la fabrication de pastilles contenant le hafnium sous forme de cristaux d'électrolyse, mais encore à la fabrication de pastilles contenant à la fois Hf et B₄C dans des proportions choisies, le ratio Hf/(Hf+B₄C) ayant une valeur de préférence choisie entre 0,20 et 0,80. Une autre possibilité d'ajuster les pouvoirs absorbants ainsi que la tenue mécanique des comprimés, surtout si on ne fait pas le traitement de frittage, est d'inclure dans le mélange à comprimer d'autres éléments métalliques fondant à plus de 400°C et comprenant (% en masse du total) :
. Zr et/ou alliages de Zr = 0 à 60%
. Ti et/ou alliages de Ti = 0 à 60%
. alliages Hf-Zr de teneur en Zr<55% = 0 à 60%
. alliages Hf-Ti de teneur en Ti<55% = 0 à 60%
. éléments métalliques absorbants pour les neutrons et fondant à plus de 400°C :<0,2%
. autres éléments métalliques fondant à plus de 400°C: <3%.

Ces produits métalliques, qui doivent être compactables au sein du mélange de départ formé, sont essentiellement sous forme de cristaux d'électrolyse et/ou de copeaux et/ou d'éponge, le terme "copeaux" désignant les fragments métalliques résultant d'opérations d'usinage telles que le tournage, le fraisage, le perçage ainsi qu'éventuellement de petites chutes de volume unitaire en général inférieur à 1cm³, et le terme "éponge" désignant les produits issus d'une réduction par Mg ou réduction Kroll dans le cas de Hf, Zr et Ti. Ces produits peuvent comprendre, en plus des cristaux d'électrolyse en Hf, des cristaux d'électrolyse en Zr et/ou Ti, ayant des teneurs en H et Cl respectivement inférieures à 40 ppm et 50 ppm. On peut leur appliquer les mêmes traitements thermiques de purification que pour les cristaux d'électrolyse de Hf.

Les pastilles ou "pellets" sont obtenues habituellement au moyen de plusieurs opérations successives de remplissage et de compression comme on l'a déjà vu. Un traitement de frittage peut être alors souhaité, généralement avant une opération de rectification telle que un rôdage avec une meule abrasive. Ce traitement de frittage en atmosphère réductrice sous pression est effectué typiquement entre 1970 et 2030°C.

L'invention a pour deuxième objet les pastilles ou "pellets" obtenues qui ont typiquement pour composition (% en masse):
. Hf 20 à 100%, la masse totale de Hf comprenant au moins 20% de cristaux d'électrolyse
. B₄C 0 à 80%
. (Hf + B₄C) = 40 à 100%
. Zr + Ti 0 à 60%
. autres éléments métalliques fondant à plus de 400°C<6%
Ces pastilles ont une particularité facilement décelable lorsqu'elles n'ont pas été traitées thermiquement à haute température, les cristaux d'électrolyse de Hf y étant détectables. Ces cristaux constituent alors typiquement au moins la moitié de la masse de Hf présente.

Fréquemment, ces pastilles contiennent à la fois du Hf et du carbure de bore, occupant soit la totalité soit au moins 40% de la masse totale, avec Hf/(Hf + B₄C) compris entre 0,20 et 0,80.

L'invention a encore pour objet les utilisations diverses des pastilles obtenues par le procédé de l'invention de teneurs en Hf et éventuellement en B ajustables de façon continue, dans les barres de contrôle des réacteurs nucléaires à eau :
- soit directement dans un logement d'une barre de contrôle, par exemple un trou borgne bouché après remplissage, les pastilles ayant des teneurs en Hf et en B₄C variées selon leurs positions individuelles;
- soit sous forme d'élément absorbeur de neutrons gainé qui sera fixé à une barre de contrôle: on obtient alors des pastilles dans une gaine métallique, par exemple un tube fermé à une extrémité, et on scelle cette gaine, les pastilles ayant soit les mêmes teneurs en Hf et éventuellement en B₄C, dans cet élément absorbeur, teneurs pouvant dépendre de la position de cet élément dans la barre de contrôle, soit des teneurs individuelles en Hf et éventuellement en B₄C variant selon leurs positions dans cet élément.

### AVANTAGES DE L'INVENTION

Ils sont nombreux et importants économiquement :
- utilisation surprenante de Hf pur sous forme de cristaux d'électrolyse, évitant des transformations compliquées et coûteuses ;
- souplesse vis-à-vis des sources ou formes de métaux et alliages;
- p̂ossibilité de réaliser des pastilles comprimées de contour en section droite non circulaire, convexe ou partiellement concave;
- ajustement facile des teneurs en Hf et B₄C, possibilité de réaliser des variations de ces teneurs dans un élément gainé ou directement sur la barre de contrôle;
- simplicité du procédé de fabrication.

### EXEMPLES

### Exemple 1 :

on prépare un mélange de masses égales de copeaux d'électrolyse de Hf et de poudre de carbure de bore de taille de grain moyenne de 16 µm.
On réalise au moyen de trois remplissages partiels et de compressions cinq comprimés cylindriques circulaires de diamètre 5,95 mm et de hauteur 100 mm. La densité apparente obtenue est de 0,88 à 0,91. Les comprimés sont ensuite soumis à une rectification sur machine centerless, leurs surfaces rectifiées sont satisfaisantes.

### Exemple 2 :

On prépare 5 Lots de 4 pastilles de diamètre 5,95 mm et de hauteur 15 mm, ces 5 lots successifs étant constitués de Hf et de B₄C en teneurs échelonnées comme suit :

| | teneurs (% en masse) | |
|---|---|---|
| | Hf | B₄C |
| Lot n°1 | 70 | 30 |
| Lot n°2 | 60 | 40 |
| Lot n°3 | 50 | 50 |
| Lot n°4 | 40 | 60 |
| Lot n°5 | 30 | 70 |

Les pastilles comprimées à 6,1 mm de diamètre sont ensuite rectifiées au diamètre 5,95 plus ou moins 0,01 mm.
Cinq pastilles provenant de chacun des 5 lots sont introduites dans un tube en acier inoxydable de diamètre intérieur 6,00 mm, d'épaisseur 0,8 mm et de longueur 100 mm fermé à une extrémité par un bouchon soudé de hauteur 12,5mm. Après introduction des 5 pastilles dans le tube dans l'ordre des teneurs décroissantes en Hf, le deuxième bouchon du tube est mis en place et soudé avec mise sous vide de l'intérieur, en soudure latérale traversant l'extrémité du tube.

Ce remplissage et cette fermeture sont répétés deux fois, sans difficulté. On note que ces "pellets" de teneurs échelonnées en Hf et B₄C pourraient aussi bien être introduits non gainés dans un logement d'une barre de contrôle.

## Revendications

1. Procédé de fabrication d'une pastille absorbeuse de neutrons pour utilisation dans un dispositif de contrôle de réacteur nucléaire, caractérisé en ce qu'il comprend les étapes suivantes :
a) on prépare des produits compactables comprenant (% en masse):
. des cristaux d'électrolyse ou des copeaux de Hf et éventuellement de la poudre de carbure de bore, de masse totale (Hf+B₄C)=40 à 100%, le ratio Hf/(Hf+B₄C) étant de 0,20 à 1;
. éventuellement d'autres éléments métalliques fondant à plus de 400°C.
b) on mélange ces produits, et on les comprime dans un moule en une ou plusieurs opérations de remplissage et de compression, jusqu'à obtenir une pastille de densité apparente supérieure à 80% de sa densité moyenne à l'état massif;
c) on effectue éventuellement sur cette pastille un traitement de frittage;
d) on extrait ou on a extrait cette pastille du moule;
e) on rectifie éventuellement la pastille.

2. Procédé selon la revendication 1, dans lequel la masse totale des produits compactables en Hf comprend au moins 20% de cristaux d'électrolyse.

3. Procédé selon la revendication 2, dans lequel la masse des cristaux d'électrolyse de Hf est 0,5 à 1 fois la masse totale de Hf.

4. Procédé selon la revendication 1, dans lequel tout le hafnium est sous forme de cristaux d'électrolyse.

5. Procédé selon l'une quelconque des revendications 1 à 4, dans lequel les cristaux d'électrolyse utilisés ont des teneurs moyennes en H et Cl respectivement inférieures à 25 et 30 ppm.

6. Procédé selon la revendication 5, dans lequel on a traité préalablement les cristaux d'électrolyse utilisés entre 150 et 300°C sous vide ou sous gaz inerte.

7. Procédé selon la revendication 5, dans lequel on a préalablement traité les cristaux d'électrolyse utilisés 8h à 48h entre 1000 et 1250°C, et de préférence 16h à 32h entre 1050 et 1150°C, ces cristaux ayant alors des teneurs moyennes en H et Cl respectivement inférieures à 20ppm et 10ppm.

8. Procédé selon l'une quelconque des revendications 1 à 3, dans lequel le ratio Hf/(Hf+B₄C) est compris entre 0,20 et 0,80.

9. Procédé selon l'une quelconque des revendications 1 à 8, dans lequel les produits compactables comprennent jusqu'à 60% de produits métalliques autres que Hf, qui comprennent eux-mêmes (% en masse du total):
. Zr et/ou alliages de Zr = 0 à 60%
. Ti et/ou alliages de Ti = 0 à 60%
. alliages Hf-Zr de teneur en Zr<55% = 0 à 60%
. alliages Hf-Ti de teneur en Ti<55% = 0 à 60%
. éléments métalliques absorbants pour les neutrons et fondant à plus de 400°C :<0,2%
. autres éléments métalliques fondant à plus de 400°C : <3%

10. Pastille comprimée obtenue par le procédé de l'une quelconque des revendications 1 à 9, comprenant (% en masse):
. Hf 20 à 100%, la masse totale de Hf comprenant au moins 20% de cristaux d'électrolyse
. B₄C 0 à 80% avec (Hf+B₄C) = 40 à 100%
. Zr + Ti 0 à 60%
. autres éléments métalliques fondant à plus de 400°C : <6%

11. Pastille selon la revendication 10, dans laquelle Hf est au moins pour moitié sous forme de cristaux d'électrolyse.

12. Pastille selon l'une quelconque des revendications 10 ou 11, dans laquelle Hf / (Hf+B₄C) = 0,20 à 0,80.

13. Utilisation de pastilles selon les revendications 10 à 12 dans laquelle on dispose ces pastilles à l'intérieur d'un logement d'une barre de contrôle, lesdites pastilles ayant des teneurs en Hf et en B₄C variées selon leurs positions individuelles.

14. Utilisation de pastilles selon les revendications 10 à 12 dans laquelle on introduit ces pastilles dans une gaine métallique et on scelle cette gaine, obtenant ainsi un élément absorbeur de neutrons gainé.

15. Utilisation selon la revendication 14, dans laquelle lesdites pastilles ont les mêmes teneurs respectives en Hf et éventuellement B₄C, choisies en fonction de la position de l'élément absorbeur dans une barre de contrôle.

16. Utilisation selon la revendication 14, dans laquelle lesdites pastilles ont des teneurs individuelles en Hf et éventuellement B₄C variant selon leur position dans ledit élément absorbeur.

## Claims

1. Process for the production of a neutron absorbing pellet for use in a nuclear reactor control device, characterized in that it comprises the following stages:
a) compactable products are prepared incorporating as % by weight electrolytic crystals or chips of Hf and optionally boron carbide powder with a total weight (Hf + B₄C) of 40 to 100%, the Hf:(Hf+B₄C) ratio being 0.20 to 1 and optionally other metallic elements melting at above 400°C;
b) these products are mixed and compressed in a mould in one or more filling and compression operations until a pellet is obtained with an apparent density higher than 80% of its average density in the solid state;
c) a sintering treatment is optionally carried out on said pellet;
d) the pellet is or has been extracted from the mould;
e) the pellet is optionally ground.

2. Process according to claim 1, wherein the total weight of the compactable Hf products comprises at least 20% of electrolytic crystals.

3. Process according to claim 2, wherein the weight of the Hf electrolytic crystals is 0.5 to 1 times the total Hf weight.

4. Process according to claim 1, wherein all the hafnium is in the form of electrolytic crystals.

5. Process according to any one of the claims 1 to 4, wherein the electrolytic crystals used have average H and Cl contents respectively below 25 and 30 ppm.

6. Process according to claim 5, wherein there is a prior treatment of the electrolytic crystals used at between 150 and 300°C in vacuo or under inert gas.

7. Process according to claim 5, wherein the electrolytic crystals used undergo a prior treatment for 8 to 48 h between 1000 and 1250°C, preferably 16 to 32 h between 1050 and 1150°C, said crystals then having average H and Cl contents respectively below 20 and 10 ppm.

8. Process according to any one of the claims 1 to 3, wherein the Hf : (Hf + B₄C) ratio is between 0.20 and 0.80.

9. Process according to any one of the claims 1 to 8, wherein the compactable products comprise up to 60% metallic products other than Hf and which themselves comprise (% by weight of the total) :
Zr and/or Zr alloys = 0 to 60 %
Ti and/or Ti alloys = 0 to 60 %
Hf-Zr alloys of Zr content < 55% = 0 to 60 %
Hf-Ti alloys of Ti content < 55% = 0 to 60 %
neutron absorbing metallic elements melting at above 400°C : < 0.2%
other metallic elements melting at above 400°C: < 3%.

10. Compressed pellet obtained by the process of any one of the claims 1 to 9 comprising in % by weight:
Hf 20 to 100%, the total Hf weight consisting of at least 20% of electrolytic crystals
B₄C : 0 to 80% with (Hf + B₄C) : 40 to 100%
Zr + Ti : 0 to 60%
other metallic elements melting at above 400°C : < 6%

11. Pellet according to claim 10, wherein at least half of the Hf is in the form of electrolytic crystals.

12. Pellet according to one of the claims 10 or 11, wherein Hf/ (Hf + B₄C)= 0.20 to 0.80.

13. Use of pellets according to the claims 10 to 12, wherein the pellets are placed in a recess of a control rod, said pellets having Hf and B₄C contents varying as a function of their individual positions.

14. Use of pellets according to the claims 10 to 12, wherein these pellets are introduced into a metal sheath and the latter is sealed, thus giving a sheathed neutron absorbing element.

15. Use according to claim 14, wherein said pellets have the same respective Hf and optionally B₄C contents chosen as a function of the position of the absorbing element in a control rod.

16. Use according to claim 14, wherein said pellets have individual Hf and optionally B₄C contents varying as a function of their position in said absorbing element.

## Patentansprüche

1. Verfahren zur Herstellung einer Neutronen absorbierenden Tablette zur Verwendung in einer Kernreaktor-Steuereinrichtung,
dadurch gekennzeichnet,
daß es die folgenden Schritte aufweist:
a) Man stellt kompaktible Produkte her, die (in Masse-%) aufweisen:
· Hf-Elektrolysekristalle oder -Späne und eventuell Borkarbidpulver einer Gesamtmasse (Hf+B₄C) = 40 bis 100 %, wobei das Verhältnis Hf/(Hf+B₄C) 0,20 bis 1 ist;
· eventuell andere metallische Elemente, die über 400 °C schmelzen;
b) man mischt diese Produkte und komprimiert sie in einer Form in einem oder mehreren Füll- und Kompressionsvorgängen bis zum Erhalten einer Tablette von scheinbarer Dichte über 80 % ihrer mittleren Dichte im massiven Zustand;
c) man nimmt mit dieser Tablette eventuell eine Sinterbehandlung vor;
d) man entnimmt oder hat diese Tablette aus der Form entnommen;
e) man glättet eventuell die Tablette.

2. Verfahren nach dem Anspruch 1, bei dem die Gesamtmasse der kompaktiblen Produkte an Hf wenigstens 20 % Elektrolysekristalle enthält.

3. Verfahren nach dem Anspruch 2, bei dem die Masse der Hf-Elektrolysekristalle das 0,5- bis 1-fache der Hf-Gesamtmasse ist.

4. Verfahren nach dem Anspruch 1, bei dem das gesamte Hafnium in Form von Elektrolysekristallen ist.

5. Verfahren nach irgendeinem der Ansprüche 1 bis 4, bei dem die verwendeten Elektrolysekristalle mittlere Gehalte an H und Cℓ unter 25 bzw. 30 ppm haben.

6. Verfahren nach dem Anspruch 5, bei dem man die verwendeten Elektrolysekristalle vorab zwischen 150 und 300 °C unter Vakuum oder unter Inertgas behandelt hat.

7. Verfahren nach dem Anspruch 5, bei dem man die verwendeten Elektrolysekristalle vorab 8 h bis 48 h zwischen 1000 und 1250 °C und vorzugsweise 16 h bis 32 h zwischen 1050 und 1150 °C behandelt hat, wobei diese Kristalle dann mittlere Gehalte an H und Cℓ unter 20 ppm bzw. 10 ppm aufweisen.

8. Verfahren nach irgendeinem der Ansprüche 1 bis 3, bei dem das Verhältnis Hf/(Hf+B₄C) zwischen 0,20 und 0,80 liegt.

9. Verfahren nach irgendeinem der Ansprüche 1 bis 8, bei dem die kompaktiblen Produkte bis zu 60 % andere metallische Stoffe als Hf aufweisen, die selbst (in Masse-% des Gesamten) aufweisen:
· Zr und/oder Zr-Legierungen = 0 bis 60 %
· Ti und/oder Ti-Legierungen = 0 bis 60 %
· Hf-Zr-Legierungen mit Zr-Gehalt < 55 % = 0 bis 60 %
· Hf-Ti-Legierungen mit Ti-Gehalt < 55 % = 0 bis 60 %
· Neutronen absorbierende und über 400 °C schmelzende metallische Elemente: < 0,2 %
· andere über 400 °C schmelzende metallische Elemente: < 3 %

10. Durch das Verfahren irgendeines der Ansprüche 1 bis 9 erhaltene komprimierte Tablette, die (in Masse-%) aufweist:
· Hf 20 bis 100 %, wobei die Hf-Gesamtmasse wenigstens 20 % Elektrolysekristalle aufweist
· B₄C 0 bis 80 % mit (Hf+B₄C) = 40 bis 100 %
· Zr + Ti 0 bis 60 %
· andere über 400 °C schmelzende metallische Elemente: < 6 %

11. Tablette nach dem Anspruch 10, in der Hf wenigstens zur Hälfte in Form von Elektrolysekristallen ist.

12. Tablette nach irgendeinem der Ansprüche 10 oder 11, in der Hf/(Hf+B₄C) = 0,20 bis 0,80.

13. Verwendung von Tabletten nach den Ansprüchen 10 bis 12, bei der man diese Tabletten im Inneren eines Raumes eines Steuerstabes anordnet, wobei die Tabletten unterschiedliche Gehalte an Hf und an B₄C je nach ihren einzelnen Lagen haben.

14. Verwendung von Tabletten nach den Ansprüchen 10 bis 12, bei der man diese Tabletten in eine metallische Hülle einführt und diese Hülle abdichtet, wodurch man ein ummanteltes Neutronenabsorbierelement erhält.

15. Verwendung nach dem Anspruch 14, bei der die Tabletten die gleichen Gehalte an Hf bzw. eventuell an B₄C haben, die als Funktion der Lage des Absorbierelements in einem Steuerstab gewählt sind.

16. Verwendung nach dem Anspruch 14, bei der die Tabletten je nach ihrer Lage im Absorbierelement unterschiedliche Gehalte an Hf bzw. eventuell B₄C haben.
